# EUROPÄISCHE PATENTSCHRIFT

(11) **EP 3 607 138 B1**
(45) Veröffentlichungstag und Bekanntmachung des Hinweises auf die Patenterteilung: **13.12.2023**
(21) Anmeldenummer: 18712561.2
(22) Anmeldetag: 19.03.2018
(51) Int. Cl.: D21G 1/02

(54) **VERFAHREN UND VORRICHTUNG ZUR BEHANDLUNG EINER WARENBAHN**
METHOD AND DEVICE FOR THE TREATMENT OF A PRODUCT WEB
PROCÉDÉ ET DISPOSITIF DE TRAITEMENT D'UNE BANDE DE MATIÈRE

(30) Priorität: 03.04.2017 DE 102017107120
(43) Veröffentlichungstag der Anmeldung: 12.02.2020
(73) Patentinhaber: Andritz Küsters GmbH, 47805 Krefeld (DE)
(72) Erfinder: SCHARFENBERG, Manfred, 47803 Krefeld (DE); KOHNEN, Franz-Josef, 47918 Tönisvorst (DE); LUKAS, Andreas, 47665 Sonsbeck (DE); HÜNNEKENS, Andre, 47638 Straelen (DE)
(74) Vertreter: Kluin Patent
(86) Internationale Anmeldenummer: PCT/EP2018/056794
(87) Internationale Veröffentlichungsnummer: WO 2018/184819

(56) Entgegenhaltungen:
- WO-A2-2016/046030
- DE-A1- 3 216 182

## Beschreibung

Die Erfindung betrifft ein Verfahren zur Behandlung einer Warenbahn, bei welcher die Warenbahn in einer Vorlaufrichtung transportiert und durch einen ersten, von einer Behandlungswalze und einem Gegenwerkzeug gebildeten Behandlungsspalt geführt wird. Die Erfindung betrifft auch eine Vorrichtung zur Durchführung dieses Behandlungsverfahrens.

Es ist bekannt, eine Warenbahn zu deren Behandlung in einer Vorlaufrichtung zu transportieren und durch einen von einer in einer Arbeitsposition befindlichen Behandlungswalze und einem Gegenwerkzeug gebildeten Behandlungsspalt zu führen. Bei derartigen Warenbahnen kann es sich insbesondere um solche aus Vlies, Textil, Kunststoff oder Papier sowie aus eines oder mehrere dieser Materialien umfassenden Verbundwerkstoffe handeln.

Bei einer derartigen Behandlung besteht regelmäßig die Notwendigkeit, die Behandlungswalze auszutauschen. Als Gründe seien beispielhaft genannt:
- Erreichen der Verschleißgrenze der Behandlungswalze.
- Änderung des Behandlungsergebnisses durch Austausch der Behandlungswalze gegen eine solche mit geänderter Oberflächenstruktur und/oder Oberflächeneigenschaft, beispielsweise geänderter Gravur, Belagmaterial, Belaghärte etc.

Auch kann ein Austausch der Behandlungswalze durch den Wunsch einer Änderung der das Behandlungsergebnis maßgeblich beeinflussenden Oberflächentemperatur der Behandlungswalze veranlasst sein. Eine solche Temperaturänderung lässt sich regelmäßig schneller durch einen Wechsel der Behandlungswalze gegen eine solche mit der gewünschten Temperatur vorgehaltene weitere Walze bewerkstelligen, da eine Temperaturänderung der Oberfläche einer Walze zur Vermeidung von Thermospannungen im Walzenmaterial oft nur mit 1 bis 3 K/min möglich ist.

Als beispielhafte Behandlung einer Warenbahn sei das thermische Verfestigen einer Warenbahn genannt, die Vliesstoff, der thermoplastische Fasern oder Filamente aufweist, umfasst. Beim thermischen Verfestigen von Vliesstoffen mit Hilfe eines Behandlungsspaltes ist die Behandlungswalze regelmäßig als gravierte Walze ausgebildet. Bei dem Gegenwerkzeug handelt es sich regelmäßig um eine glatte Walze. Je nach durch das gewünschte Behandlungsergebnis gestellten Anforderungen kann es sich jedoch bei der das Gegenwerkzeug bildenden Walze auch um eine gravierte Walze handeln. Zumindest eine der beiden Walzen, vorzugsweise die Behandlungswalze, ist beheizt. Üblicherweise beträgt die Oberflächentemperatur der beheizten Walze zwischen 80° C und 300° C, bevorzugt zwischen 120° C und 250° C, besonders bevorzugt zwischen 140° C und 200° C. Die Linienkraft im Behandlungsspalt beträgt bei Thermobondingverfahren üblicherweise zwischen 10 - 300 N/mm, bevorzugt 30 - 150 N/mm. Um verschiedene Produkte erzeugen zu können, muss zumindest die Behandlungswalze austauschbar sein.

Bei der Behandlung von Papier oder Textilien wird der Behandlungsspalt häufig von einer Behandlungswalze mit einem elastischen Belag und einem Gegenwerkzeug gebildet, welches insbesondere als beheizte glatte oder auch gravierte Walze ausgebildet sein kann. Auch bei einer derartigen Behandlung besteht die Notwendigkeit die Behandlungswalze austauschen zu können, um beispielsweise eine andere Belagsart oder -härte zum Einsatz bringen zu können, oder um die Behandlungswalze beim Erreichen ihrer Verschleißgrenze gegen eine unverschlissene Walze austauschen zu können. Bei den Belägen dieser Behandlungswalzen kann es sich beispielsweise um Kunststoffbeläge oder auch um solche handeln, die Baumwollmaterial enthalten.

Aus der DE 32 16 182 A2 ist ein Verfahren zum Betrieb eines Walzenaggregats für Bahnen, welches ein rasches Auswechseln einer beschädigten oder abgenutzten elastischen Arbeitswalze ermöglichen soll, bekannt. Hierzu sind einer harten Basiswalze zumindest zwei elastische Arbeitswalzen zugeordnet, die in eine Arbeitsposition und in eine Trennposition gebracht werden können. Im Betrieb werden die erste Arbeitswalze in der Arbeitsposition und die zweite Arbeitswalze in der Trennposition als Reservewalze gehalten. Zum Wechsel der ersten Arbeitswalze wird die zweite Arbeitswalze in eine zweite Arbeitsposition verstellt. Etwa gleichzeitig mit dieser Verstellung wird die erste Arbeitswalze in eine Parkposition abgehoben. Die ersten und zweiten Arbeitswalzen befinden sich auf einander gegenüberliegenden Seiten der Basiswalze.

Es besteht bereits seit langem der Wunsch einen schnellen Wechsel einer Behandlungswalze durchführen zu können. Hierzu geeignet ist beispielsweise der aus der DE 100 05 306 C1 bekannte Kalander. Er umfasst zwei jeweils an einem eigenen Hebel gelagerte Behandlungswalzen, die abwechselnd aus jeweils einer Parkposition in eine Arbeitsposition verlagert werden können, in denen die jeweilige Behandlungswalze mit einem Gegenwerkzeug - hier einer Gegenwalze - den Behandlungsspalt bildet. Durch Ausschwenken einer ersten Behandlungswalze aus der Arbeitsposition in ihre Parkposition und anschließendes Einschwenken der zweiten Behandlungswalze aus ihrer Parkposition in die Arbeitsposition ist ein Wechsel der Behandlungswalzen prinzipiell in kürzester Zeit möglich.

Trotz dieser maschinell geschaffenen Möglichkeit eines schnellen Behandlungswalzenwechsels ist dieser aufgrund verfahrenstechnischer Bedingungen in der Praxis jedoch nicht immer möglich. Beispielhaft sei ein Herstellungsverfahren von Vliesstoffen benannt, welches den Verfahrensschritt der thermischen Verfestigung umfasst.

Bei diesem Verfahren werden häufig Kalander zur thermischen Verfestigung des Vliesstoffes in Vorlaufrichtung der Warenbahn nach einer so genannten Spinnmaschine angeordnet. Bei dieser Spinnmaschine werden von einem oder mehreren Spinnbalken Fasern oder Filamente - nachfolgend zusammenfassend als "Filamente" bezeichnet - aus einem thermoplastischen Material auf der Oberseite eines umlaufenden Siebbands abgelegt (nachfolgend auch kurz "Spinnprozess" genannt), welches nahe des Behandlungsspalts umgelenkt wird und welches dem Transport der Filamentlage - auch unverfestigtes Vlies oder unverfestigte Warenbahn genannt - zum Behandlungsspalt dient. Zu jedem Spinnbalken kann ein Extruder gehören, mittels welchem ein Granulat aus thermoplastischem Kunststoff zu einer Schmelze erhitzt und die Schmelze unter Druck im Spinnbalken vorgesehenen Spinndüsen zugeführt wird. Die aus den Spinndüsen austretenden Filamente werden durch einen auf die Oberseite des Siebbandes auftreffenden Luftstrom verstreckt, abgekühlt und auf dem Siebband abgelegt. Der Luftstrom kann durch das Siebband gesaugt werden.

Beim Durchtritt durch den Behandlungsspalt erfährt das zuvor unverfestigte Vlies aufgrund der im Behandlungsspalt herrschenden Temperatur und des herrschenden Liniendrucks eine Verfestigung, die es ermöglicht, die Warenbahn weiteren Behandlungsstationen, wie beispielsweise Kühl-, Auftrags-, Trocknungs- oder Aufwickeleinrichtungen sowie Zugwerken oder Inspektionssystemen zur Qualitätskontrolle zuführen zu können.

Obwohl - wie eingangs beschrieben - Vorrichtungen wie beispielsweise der in der DE 100 05 306 C1 beschriebene Kalander bekannt sind, die das schnelle Auswechseln einer Behandlungswalze ermöglichen, wird aufgrund der Rissempfindlichkeit der noch unverfestigten Vliesbahn bei dem beschriebenen Verfahren zur thermischen Verfestigung regelmäßig der Transport der Warenbahn in Vorlaufrichtung für die Dauer des Walzenwechsels unterbrochen, also während des Walzenwechsels keine Warenbahn durch den Kalander und die weiteren Anlagenkomponenten geführt. Das umlaufende Siebband wird hierzu angehalten. Um zu vermeiden, dass sich auf dem Siebband von dem oder mehreren Spinnbalken abgelegte Filamente während dessen Aufhäufen, muss auch die Abgabe der Filamente unterbrochen, mit anderen Worten müssen die Spinnbalken stillgesetzt werden.

Die Stillsetzung ist von erheblichem Nachteil, da die Warenbahn zunächst neu bei einer Transportgeschwindigkeit von kleiner 50 m/min aufgeführt werden muss.

Hierzu wird zur Erzielung der zum Aufführen notwendigen Warenbahnstabilität zunächst ein vorbereiteter Vorläufer auf das Siebband aufgelegt, durch die Anlage geführt und anschließend der Spinnprozess auf den Vorläufer wieder angefahren. Schließlich wird die Transportgeschwindigkeit wieder erhöht, auf üblicherweise 100 m/min bis 1.000 m/min oder sogar darüber. Nach einem Wiederanfahren bedarf es zunächst einer nicht unerheblichen Zeitdauer, bis sich die für das gewünschte Behandlungsergebnis erforderlichen Behandlungsparameter, wie Temperatur der Spinnbalken, Viskosität des Thermoplasts, davon abhängiges Flächengewicht der unverfestigten Warenbahn etc. eingestellt haben. Nicht nur durch die Unterbrechung des Behandlungsverfahrens während des Walzenwechsels, sondern auch durch die Produktion einer nicht unerheblichen Menge an Ausschuss nach der Wiederinbetriebnahme des Behandlungsverfahrens ist die Produktionseffizienz durch einen Walzenwechsel empfindlich gestört.

Alternativ zu den vorstehend beschriebenen Vorgehensweisen können für einen Walzenwechsel die Filamente von den Spinnbalken auf eine bereits verfestigte Warenbahn abgelegt werden, die vor dem Spinnbalken abgewickelt und auf das Siebband abgelegt wird. Oder die abgelegten Filamente werden in zwei bereits verfestigte Warenbahnen eingefasst, indem noch eine zusätzliche nach dem Spinnbalken auf die Lage an Filamenten abgelegt wird. Die Zufuhr dieser zusätzlichen Warenbahn(en) wird vor dem Walzenwechsel gestartet und erst hinterher gestoppt.

Um das manuelle Handling der verfestigten Lage(n) zu ermöglichen, muss auch hier die Transportgeschwindigkeit zunächst auf beispielsweise kleiner 50 bis 100 m/min reduziert werden. Um die Menge des während des Walzenwechsels erzeugten Ausschusses gering zu halten, und um insbesondere bei Anlagen mit hohem Gesamtdurchsatz das Flächengewicht der unverfestigten Ober- bzw. Zwischenlage so klein zu halten, dass sie überhaupt mit Hilfe der verfestigten Lage(n) durch die Anlage geführt werden kann, kann/muss der Durchsatz der einzelnen Spinnbalken reduziert werden. Dies versucht man jedoch zu vermeiden, da diese Änderung zu einer Störung der Verfahrensparameter in den Spinnbalken führen kann. Es muss sich also auch in diesem Fall der thermische Beharrungszustand nach dem Walzenwechsel erst wieder einstellen. Auch ist der von den Anlagenbedienern zu leistende Aufwand hoch, und es muss (durch die verfestigten Lagen) deutlich mehr Material entsorgt oder recycelt werden.

Im Falle einer Behandlung von Warenbahnen beispielsweise aus Textil, Kunststoff oder Papier führt ein Walzenwechsel stets zur Unterbrechung des Behandlungsverfahrens und somit zur Reduzierung der Verfahrensproduktivität.

Der Erfindung liegt daher die Aufgabe zugrunde, ein hinsichtlich seiner Produktivität verbessertes Verfahren zur Behandlung einer Warenbahn sowie eine zur Durchführung dieses Verfahrens geeignete Vorrichtung zu schaffen.

Diese Aufgabe wird durch das in Anspruch 1 wiedergegebene Verfahren und die in Anspruch 7 wiedergegebene Vorrichtung gelöst.

Bei dem erfindungsgemäßen Verfahren werden für einen Austausch einer bei der Durchführung des Verfahrens verwendeten Behandlungswalze, nachfolgend auch "erste Behandlungswalze" genannt, die folgenden Schritte durchgeführt:
- Es wird eine zweite Walze beispielsweise in einer Parkposition bereitgestellt, während sich die erste Behandlungswalze in ihrer ersten Arbeitsposition befindet und während die Warenbahn in der Vorlaufrichtung transportiert und durch den zwischen der ersten Behandlungswalze und dem Gegenwerkzeug gebildeten Walzenspalt geführt wird.
- Die zweite Walze wird in eine zweite Arbeitsposition verlagert, in der sie mit dem Gegenwerkzeug einen zweiten Bearbeitungsspalt bildet, und zwar während auch die erste Walze zusammen mit dem Gegenwerkzeug einen ersten Bearbeitungsspalt bildet. Mit anderen Worten sieht das erfindungsgemäße Verfahren vor, dass die Warenbahn während dieses Verfahrensschrittes zwei Walzenspalte durchläuft, und zwar einen zwischen der ersten Behandlungswalze und dem Gegenwerkzeug gebildeten und einen zwischen der zweiten Walze und dem Gegenwerkzeug gebildeten. Vorzugsweise werden die Linienkräfte in den beiden Walzenspalten reduziert, beispielsweise auf 100 N/mm oder auch darunter, beispielsweise 50 N/mm. Dabei ist von Bedeutung, dass es durchaus im Rahmen dieses Verfahrensschrittes ist, dass die erste Behandlungswalze relativ zum Gegenwerkzeug verlagert wird, solange ein zusammen mit dem Gegenwerkzeug gebildeter Bearbeitungsspalt erhalten bleibt. Wenn auch wünschenswert, so ist es nicht erforderlich, dass die in dem ersten Bearbeitungsspalt herrschenden Behandlungsparameter, wie Linienkraft, Linienkraftverteilung, Temperatur etc. während dieses Verfahrensschrittes unverändert bleiben, so lange gewährleistet ist, dass eine Unterbrechung des Verfahrens beispielsweise durch einen Abriss oder durch die Bildung eines Walzenwickels aufgrund des Anhaftens der Warenbahn an einer Walze verhindert wird.
- Während die zweite Walze mit dem Gegenwerkzeug einen zweiten Bearbeitungsspalt bildet, wird bei dem erfindungsgemäßen Verfahren die erste Behandlungswalze in eine erste Parkposition verlagert, in der sie keinen Bearbeitungsspalt mit dem Gegenwerkzeug bildet.

Bei einer ersten, bevorzugten Variante des erfindungsgemäßen Verfahrens findet für die zweite Walze eine zweite Behandlungswalze Verwendung. Unter "zweite Behandlungswalze" ist eine solche Walze zu verstehen, mit welcher die Behandlung der Warenbahn - sei es mit dem Ziel, ein unverändertes Behandlungsergebnis zu erhalten, sei es, das Behandlungsergebnis beispielsweise durch Einsatz einer zweiten Behandlungswalze mit gegenüber der ersten geänderten Gravur und/oder Temperatur gezielt abzuändern - ohne Unterbrechung und insbesondere ohne, dass zwangsläufig die Parameter, unter denen die Spinnbalken betrieben werden, geändert werden müssen, fortgesetzt wird. Der Verfahrensschritt der Weiterführung des Behandlungsverfahrens mit der zweiten Behandlungswalze umfasst auch, dass die zweite Walze unter Beibehaltung der Bildung eines zweiten Behandlungsspaltes zumindest etwa in die Position verlagert wird, welche der Arbeitsposition der ersten Behandlungswalze entspricht, nachdem letztere in ihre Parkposition verlagert worden ist. Dabei können die Arbeitspositionen zumindest so weit voneinander abweichen, wie sie nicht gleichzeitig mit beiden Oberwalzen möglich wären, weil die Walzen oder ihre Lagerungen dann kollidieren würden.

Bei einer zweiten, bevorzugten Variante des erfindungsgemäßen Verfahrens handelt es sich bei der zweiten Walze um eine Hilfswalze. Unter dem Begriff "Hilfswalze" ist eine solche Walze zu verstehen, mit der zwar eine Fortsetzung des Behandlungsverfahrens unter Beibehaltung der sonstigen Verfahrensparameter wie Transportgeschwindigkeit, Linienkraft im Behandlungsspalt, Temperatur der Behandlungswalze nicht möglich ist, jedoch unter Wirkung der Hilfswalze auf die Warenbahn eine Verfestigung derselben bewirkt wird, die einen weiteren Transport, im Bedarfsfalle mit reduzierter Geschwindigkeit unter Vermeidung des Abrisses oder sonstiger das Behandlungsverfahren unterberechnender Ereignisse ermöglicht. Die Behandlung der Warenbahn mittels der Hilfswalze wird dann vorzugsweise solange fortgesetzt, bis die erste Behandlungswalze in ihre Parkposition verlagert und durch eine Ersatzbehandlungswalze in eine zweite Arbeitsposition ersetzt worden ist. Die ersten und zweiten Arbeitspositionen können zumindest so weit voneinander abweichen, wie sie nicht gleichzeitig mit beiden Oberwalzen möglich wären, weil die Walzen oder ihre Lagerungen dann kollidieren würden. Anschließend wird - besonders bevorzugt - die Hilfswalze in eine zweite Parkposition verlagert, aus der sie für einen erneuten Wechsel der ersten Behandlungswalze wieder in die zweite Arbeitsposition gebracht werden kann.

Das erfindungsgemäße Verfahren eignet sich insbesondere zur Behandlung von Warenbahnen, die Vlies, Textil, Kunststoff und/oder Papier umfassen.

Ganz besonders geeignet ist das erfindungsgemäße Verfahren zur thermischen Behandlung der Warenbahn, insbesondere zum thermischen Verfestigen einer Vlies umfassenden Warenbahn.

Zur Durchführung des erfindungsgemäßen Verfahrens können grundsätzlich alle Gegenwerkzeuge verwendet werden, die geeignet sind, mit einer Behandlungswalze und gegebenenfalls einer Hilfswalze einen Behandlungsspalt für die Warenbahn zu bilden. Besonders bevorzugt ist es, wenn das Gegenwerkzeug in Form einer Gegenwalze, insbesondere als durchbiegesteuerbare Gegenwalze bereitgestellt wird.

Die erfindungsgemäße, zur Durchführung des erfindungsgemäßen Verfahrens geeignete Vorrichtung umfasst eine erste, zur Bildung eines ersten Bearbeitungsspaltes mit einem Gegenwerkzeug in eine erste Arbeitsposition bringbare Behandlungswalze sowie eine zweite, zur Bildung eines zweiten Bearbeitungsspaltes mit dem Gegenwerkzeug zeitgleich in eine zweite Arbeitsposition bringbare zweite Walze, wobei die ersten und zweiten Arbeitspositionen nicht übereinstimmen.

Besonders bevorzugt ist die erfindungsgemäße Vorrichtung derart ausgebildet, dass die erste Behandlungswalze zwischen der ersten Arbeitsposition und einer ersten Parkposition verlagerbar ist. In der Parkposition bildet sie mit dem Gegenwerkzeug keinen Behandlungsspalt und ist in dieser vorzugsweise manipulier- und/oder auswechselbar.

Bei einer ersten bevorzugten Ausführungsform der erfindungsgemäßen Vorrichtung ist die zweite Walze als zweite Behandlungswalze - die sich durch die weiter oben beschriebenen Merkmale und Eigenschaften auszeichnet - ausgebildet. Damit diese zur Bildung eines zweiten Behandlungsspaltes genutzt werden kann, während auch die erste Behandlungswalze zusammen mit dem Gegenwerkzeug einen Behandlungsspalt bildet, ist die Vorrichtung vorzugsweise derart ausgebildet, dass die erste Behandlungswalze unter Aufrechterhaltung der Bildung eines Behandlungsspaltes mit dem Gegenwerkzeug in eine Zwischenposition verlagerbar ist. Weiterhin bevorzugt kann die erfindungsgemäße Vorrichtung derart ausgebildet sein, dass auch die als zweite Behandlungswalze ausgebildete zweite Walze in eine einen Bearbeitungsspalt mit dem Gegenwerkzeug bildende zweite Zwischenposition verlagerbar ist, aus der sie - besonders bevorzugt - unter Beibehaltung des Bearbeitungsspaltes in eine zweite Arbeitsposition verlagerbar ist, deren Lage relativ zum Gegenwerkzeug etwa der relativen Lage der ersten Behandlungswalze in der ersten Arbeitsposition entsprechen kann. Dabei können die Arbeitspositionen so weit voneinander abweichen, wie sie nicht gleichzeitig mit beiden Oberwalzen möglich wären, weil die Walzen oder ihre Lagerungen dann kollidieren würden. Auch kann - besonders bevorzugt - das Gegenwerkzeug in vertikaler Richtung verlagerbar angeordnet sein.

Bei einer weiteren, bevorzugten Ausführungsform der erfindungsgemäßen Vorrichtung kann es sich bei der zweiten Walze um eine Hilfswalze handeln, die - bevorzugt - in eine mit dem Gegenwerkzeug einen Behandlungsspalt bildende Position verlagerbar ist, während sich die erste Behandlungswalze in ihrer ersten Arbeitsposition befindet. Die Hilfswalze verbleibt - besonders bevorzugt - in dieser Position, während die erste Behandlungswalze von der ersten Arbeitsposition in die erste Parkposition und zurück verlagert werden kann. Oder es wird eine zweite Behandlungswalze in eine zweite Arbeitsposition, in der sie mit dem Gegenwerkzeug einen Arbeitsspalt bildet, verlagert, wobei die zweite Arbeitsposition der ersten Arbeitsposition entsprechen kann. Auch können wiederum die Arbeitspositionen so weit voneinander abweichen, wie sie nicht gleichzeitig mit beiden Oberwalzen möglich wären, weil die Walzen oder ihre Lagerungen dann kollidieren würden.

Die Erfindung soll nun anhand der beigefügten, rein schematischen Zeichnungen weiter verdeutlicht werden. Es zeigen:
- Fig. 1: ein zum Stand der Technik gehörendes Behandlungsverfahren zur thermischen Verfestigung von auf einem Siebband aufgelegten Lagen von thermoplastisches Material umfassenden Filamenten zu einem Vliesstoff;
- Fig. 2a) und b): einen zur Durchführung einer Variante des erfindungsgemäßen Verfahrens geeigneten Kalanders;
- Fig. 3a) bis f): relative Positionsänderungen von zur Durchführung einer ersten Variante des erfindungsgemäßen Verfahrens geeigneten Komponenten zum Zwecke eines Walzenwechsels;
- Fig. 4a) bis d): - rein schematisch und ausschnittsweise - relative Positionsänderungen von zur Durchführung der ersten Variante des erfindungsgemäßen Verfahrens geeigneten Komponenten zum Zwecke des Walzenwechsels bei einem Kalander, der austauschbare Behandlungswalzen in einem entlang einer Strecke verlagerbaren Magazin umfasst;
- Fig. 5a) bis c): - rein schematisch und ausschnittsweise - relative Positionsänderungen von zur Durchführung der ersten Variante des erfindungsgemäßen Verfahrens geeigneten Komponenten zum Zwecke des Walzenwechsels bei einem Kalander, der austauschbare Behandlungswalzen in einem um eine Drehachse drehbaren Revolvermagazin umfasst, sowie
- Fig. 6a) bis e): relative Positionsänderungen von zur Durchführung einer zweiten Variante des erfindungsgemäßen Verfahrens geeigneten Komponenten während eines Walzenwechsels.

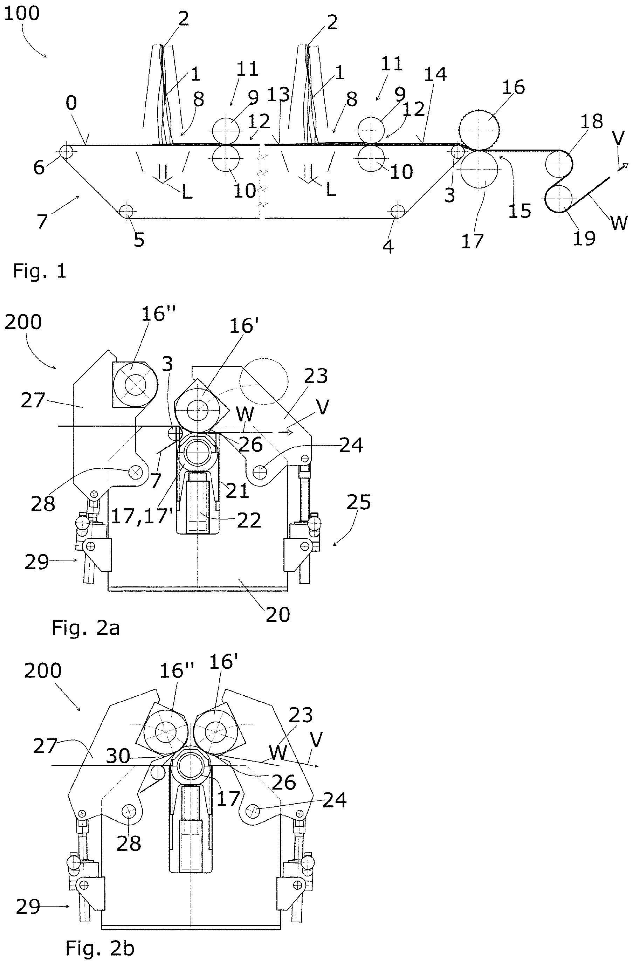

Die in Fig. 1 rein schematisch in einer Ansicht quer zur Vorlaufrichtung V einer Warenbahn W dargestellte Vorrichtung 100 dient zur Verfestigung einer Vlies umfassenden Warenbahn. Die Warenbahn weist Filamente 1 aus thermoplastischem Material auf. Zur Bereitstellung dieser Filamente ist regelmäßig mindestens ein Spinnbalken 2 vorgesehen. Die in Fig. 1 dargestellte Vorrichtung umfasst zwei Spinnbalken 2. Mit Hilfe dieser Spinnbalken 2 werden die jeweils abgegebenen Filamente 1 auf eine Oberseite O eines Siebbandes 7 oder ggf. auf eine bereits auf dem Siebband 7 befindliche Filamentschicht abgelegt. Das Siebband 7 ist als um Umlenkrollen 3, 4, 5, 6 geführte Endlosschleife ausgebildet. Zum Zwecke einer störungsfreien Ablage der Filamente wird mit einem in der Zeichnung nicht dargestellten, geeigneten Gebläse im jeweiligen Ablagebereich 8 des jeweiligen Spinnbalkens 2 ein Luftstrom L erzeugt, der das Siebband 7 von oben nach unten durchsetzt.

In Vorlaufrichtung V gesehen hinter einem Ablagebereich 8 ist jeweils ein zwei Walzen 9, 10 umfassendes Vorkompaktierungs-Walzenpaar 11 vorgesehen. Die beiden Walzen 9, 10 bilden zwischen sich einen Vorkompaktierungs-Walzenspalt 12, welcher die von den bezogen auf die Vorlaufrichtung V zuvor lose auf dem Siebband 7 abgelegten Filamente 1 zu einer noch unverfestigten Warenbahn vorkompaktiert.

Bei dem in Fig. 1 dargestellten Ausführungsbeispiel der Vorrichtung 100 legt der in Vorlaufrichtung V zweite, in Fig. 1 rechts dargestellte Spinnbalken Filamente 1 auf eine erste, vorkompaktierte Filamentschicht 13 ab. Diese Lage wird mit einem in Vorlaufrichtung nachfolgenden weiterhin Vorkompaktierungs-Walzenpaar zu einer insgesamt vorverfestigten, zweilagigen Filamentschicht 14 vorkompaktiert.

Auf der Oberfläche O des umlaufenden Siebbands 7 aufliegend wird die Filamentschicht 14 im Bereich der in Vorlaufrichtung V vordersten Umlenkrolle 3 an einen Thermobondier-Walzenspalt 15 übergeben, der zwischen einer Behandlungswalze 16 und einem Gegenwerkzeug 17 gebildet ist. Bei dem in der Zeichnung dargestellten Ausführungsbeispiel der Vorrichtung 100 ist die Behandlungswalze von einer beheizten, gravierten Walze, das Gegenwerkzeug 17 von einer glatten Walze gebildet. Es versteht sich, dass - je nach gewünschtem Behandlungsergebnis und je nach durch die verwendeten Filamente vorgegebenen Bedingungen - auch anders ausgebildete Behandlungswalzen und Gegenwerkzeuge Verwendung finden können. Lediglich beispielhaft sei erwähnt, dass auch als Gegenwerkzeug eine gravierte, beispielsweise zusätzlich oder alternativ zur Behandlungswalze 16 beheizte Walze Verwendung finden kann. Auch können die Behandlungswalze und/oder das Gegenwerkzeug, sofern als Walze ausgebildet, mit Drehantrieben versehen oder mit solchen gekoppelt sein.

In dem Thermobondier-Walzenspalt erfolgt die thermische Verfestigung der Warenbahn W.

In Vorlaufrichtung V derselben dem Thermobondier-Walzenspalt nachgeschaltet umläuft die Warenbahn W zwei Kühlwalzen 18, 19 derart, dass jede Seite der Warenbahn W eine Oberfläche einer der beiden Kühlwalzen kontaktiert.

Nach Passieren der Kühlwalzen 18, 19 wird die Warenbahn W - je nach gewünschtem Endprodukt - eventuell weiteren Behandlungsschritten, wie Nachbehandlungen, anschließende Trocknung und abschließender Aufwicklung unterzogen. Solche sind in Fig. 1 nicht dargestellt.

In der Praxis besteht regelmäßig die Notwendigkeit eines Austauschs der Behandlungswalze 16, beispielsweise, um diese bei Erreichen einer Verschleißgrenze gegen eine diesbezüglich neue Behandlungswalze zu ersetzen, und/oder um zur Veränderung des Behandlungsergebnisses einen Austausch gegen eine unterschiedlich gestaltete und/oder anders temperierte Behandlungswalze vorzunehmen.

Für einen derartigen Austausch einer Behandlungswalze 16 eignet sich beispielsweise der in Fig. 2a und Fig. 2b wiederum rein schematisch in einer Ansicht quer zur Warenbahn W dargestellte Kalander 200.

Er umfasst ein Gestell 20, in dem eine erste Behandlungswalze 16', eine zweite Behandlungswalze 16" und ein als Gegenwalze 17' ausgebildetes Gegenwerkzeug 17 angeordnet sind. Die Gegenwalze 17' ist hierbei an einem Schlitten 21 gelagert, der mit Hilfe einer Verlagerungseinrichtung 22 im Gestell beispielsweise, wie in Fig. 2a und 2b dargestellt, in vertikaler Richtung verlagert werden kann.

Die erste Behandlungswalze 16' ist an einem ersten Schwenkhebel 23 gelagert, der über eine Schwenkachse 24 relativ zum Gestell verschwenkt werden kann. Hierzu weist der erste Schwenkhebel 23 einen Schwenkantrieb 25 auf. Der erste Schwenkhebel 23 ist als zweiarmiger Hebel ausgebildet. Auf einer Seite der Schwenkachse 24 ist die erste Behandlungswalze 16' gelagert. Auf der anderen Seite der Schwenkachse 24 greift der Schwenkantrieb 25 an.

Bei dem in Fig. 2a dargestellten Betriebszustand befindet sich die erste Behandlungswalze 16' in ihrer Arbeitsposition, in der sie mit dem Gegenwerkzeug 17 einen Behandlungsspalt 26 bildet, durch den die Warenbahn W in Vorlaufrichtung V geführt wird.

In entsprechender Weise ist die zweite Behandlungswalze 16" an einem zweiten Schwenkhebel 27 angeordnet, der um eine Schwenkachse 28 mittels eines Schwenkantriebs 29 verschwenkbar an dem Gestell 20 gelagert ist. Bei dem in Fig. 2a dargestellten Betriebszustand befindet sich die zweite Behandlungswalze 16" in einer vom Gegenwerkzeug 17 entfernten Parkposition.

Die Schwenkantriebe 25, 29 können bei einer ersten Ausführungsform des Kalanders mit Spindelhubgetrieben ausgestattet sein. Mittels dieser wird die Position des jeweiligen Schwenkhebels 23, 27 und damit der jeweiligen Behandlungswalze 16', 16" vorgegeben. Die Verlagerungseinrichtung 22 kann dann insbesondere als hydraulisch betätigbarer Hubzylinder ausgebildet sein. Durch Variation des Hydraulikdrucks lässt sich dann die Linienkraft im Behandlungsspalt beeinflussen.

Bei einer zweiten Ausführungsform des Kalanders sind die Schwenkantriebe mit hydraulisch betätigbaren Zylindern und die Verlagerungseinrichtung mit einem Spindelhubgetriebe versehen. Da dann die Position der Gegenwalze vorgegeben ist, lässt sich die Linienkraft im Behandlungsspalt durch Variation des Hydraulikdrucks in dem Zylinder beeinflussen.

Wie in Fig. 2b erkennbar ist, zeichnet sich der Kalander 200 dadurch aus, dass die Arbeitsposition, in der die erste Behandlungswalze 16' mit dem Gegenwerkzeug 17 den ersten Behandlungsspalt 26 bildet, in eine Zwischenposition verlagerbar ist. Hierzu ist bei dem in Fig. 2b dargestellten Ausführungsbeispiel vorgesehen, den ersten Schwenkhebel 23 um die Schwenkachse 24 bei gleichzeitigem Verlagern des Gegenwerkzeugs 17 vertikal nach oben derart zu verschwenken, dass der Behandlungsspalt 26 mit Aufnahme von dessen Position zumindest im Wesentlichen erhalten bleibt. Unter "zumindest im Wesentlichen erhalten bleibt" ist zu verstehen, dass während der Verlagerung in die und in der in Fig. 2b dargestellten Betriebsposition die Warenbahn W eine Behandlung erfährt, die es ermöglicht, den Transport in Vorlaufrichtung V fortzusetzen, sei es mit unveränderter, sei es mit reduzierter Vorlaufgeschwindigkeit.

Wie ebenfalls in Fig. 2b erkennbar ist, erfolgte hier die Verlagerung der ersten Behandlungswalze 16' und des Gegenwerkzeugs 17 soweit, dass durch Schwenken des zweiten Schwenkhebels 27 im Uhrzeigersinn um die Schwenkachse 28 mit Hilfe des Schwenkantriebs 29 ein zweier Behandlungsspalt 30 zwischen der zweiten Behandlungswalze 16" und dem Gegenwerkzeug 17 gebildet wird, der von der Warenbahn W durchlaufen wird. Bei dem in Fig. 2b dargestellten Betriebszustand existieren somit zeitgleich zwei Behandlungsspalte 26, 30, die zweite Behandlungswalze 16" befindet sich ebenfalls in einer Zwischenposition. Damit das Gegenwerkzeug 17 - bei dem dargestellten Ausführungsbeispiel die Gegenwalze 17' - in die eine gleichzeitige Bildung von zwei Walzenspalten erlaubende Position verlagerbar ist, sind die Verlagerungseinrichtung 22 und der Schlitten 21 derart ausgebildet, dass ein größerer Hub mit dem Gegenwerkzeug erzielbar ist, als zur Anstellung an eine ortsfeste Behandlungswalze notwendig wäre.

Die Parameter des zweiten Behandlungsspalts 30, wie beispielsweise Linienkraft, Linienkraftverteilung und Temperatur sind dabei so gewählt, dass der Transport der Warenbahn in Vorlaufrichtung V unter der Wirkung dieses zweiten Behandlungsspalts 30 fortgesetzt werden kann, sei es mit unveränderter, sei es mit verminderter Vorlaufgeschwindigkeit.

Wie anhand der Fig. 2a und 2b sinnfällig wird, kann durch weiteres Verschwenken zunächst des ersten Schwenkhebels 23 im Uhrzeigersinn der Behandlungsspalt 26 geöffnet werden. Die erste Behandlungswalze 16' befindet sich dann in der in Fig. 2a gestrichelt dargestellten Parkposition. Durch anschließendes Verschwenken des zweiten Schwenkhebels 27 im Uhrzeigersinn bei gleichzeitigem Absenken des Gegenwerkzeugs 17 kann die zweite Behandlungswalze 16" unter zumindest im wesentlicher Aufrechterhaltung des Behandlungsspalts 30 in eine Arbeitsposition verlagert werden, die - bei dem in der Zeichnung dargestellten Ausführungsbeispiel - etwa der Arbeitsposition der ersten Behandlungswalze 16', dargestellt in Fig. 2a, entspricht.

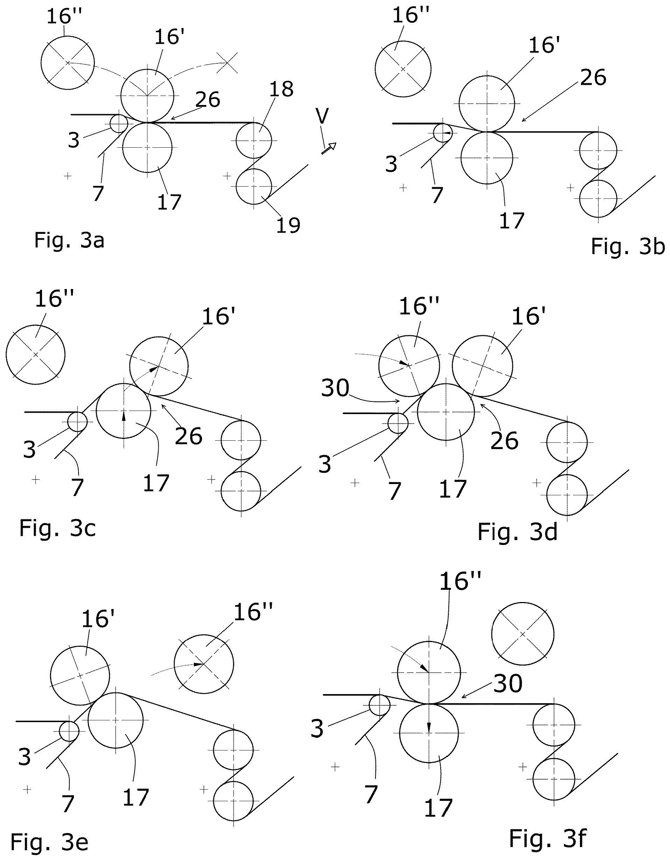

Das mit Hilfe des Kalanders 200 durchführbare Verfahren zur Behandlung einer Warenbahn soll anhand der Figuren 3a bis 3f weiter verdeutlicht werden.

Fig. 3a zeigt einen Betriebszustand, bei welchem sich die erste Behandlungswalze 16' in ihrer Arbeitsposition, in der sie mit dem als Gegenwalze ausgebildeten Gegenwerkzeug 17 den Behandlungsspalt 26 bildet, durch den die Warenbahn W in Vorlaufrichtung V vom Siebband 7 zugeführt transportiert wird.

Zur Vorbereitung eines Auswechselns der ersten Behandlungswalze 16' wird zunächst durch eine Fortverlagerung des Siebbandes 7 von dem Behandlungsspalt 26, bei dem in Fig. 3b dargestellten Ausführungsbeispiel nach links, ein Freiraum geschaffen, der eine Verlagerung des Gegenwerkzeugs 17 nach oben erlaubt, wenn gleichzeitig die erste Behandlungswalze 16' gemäß Fig. 3b nach rechts in eine Zwischenposition verschwenkt wird. Der sich dann einstellende Betriebszustand ist in Fig. 3c dargestellt. In diesem Betriebszustand wird die zweite Behandlungswalze 16" zum Gegenwerkzeug 17 hin ebenfalls verlagert, in der diese, wie in Fig. 3d dargestellt, mit dem Gegenwerkzeug 17 ebenfalls einen Behandlungsspalt 30 bildet.

Anschließend wird, wie in Fig. 3e dargestellt, die erste Behandlungswalze 16' vom Gegenwerkzeug 17 unter Öffnen des Behandlungsspalts 26 entfernt und beispielsweise in eine Parkposition verlagert. Anschließend wird unter Beibehaltung des Behandlungsspalts 30 das Gegenwerkzeug 17 abgesenkt, bis die zweite Behandlungswalze 16" die ursprünglich von der ersten Behandlungswalze 16' eingenommene Arbeitsposition und das Gegenwerkzeug 17 seine in Fig. 3a dargestellte Ausgangsposition erreicht hat. Anschließend wird zur Fortsetzung des Behandlungsverfahrens das Siebband 7 in seine in Fig. 3a dargestellte Ausgangsposition zurückverlagert.

Während dieses gesamten Walzenwechselvorgangs wird der Transport der Warenbahn W in Vorlaufrichtung V fortgesetzt, sei es mit unveränderter, sei es mit verminderter Vorlaufgeschwindigkeit.

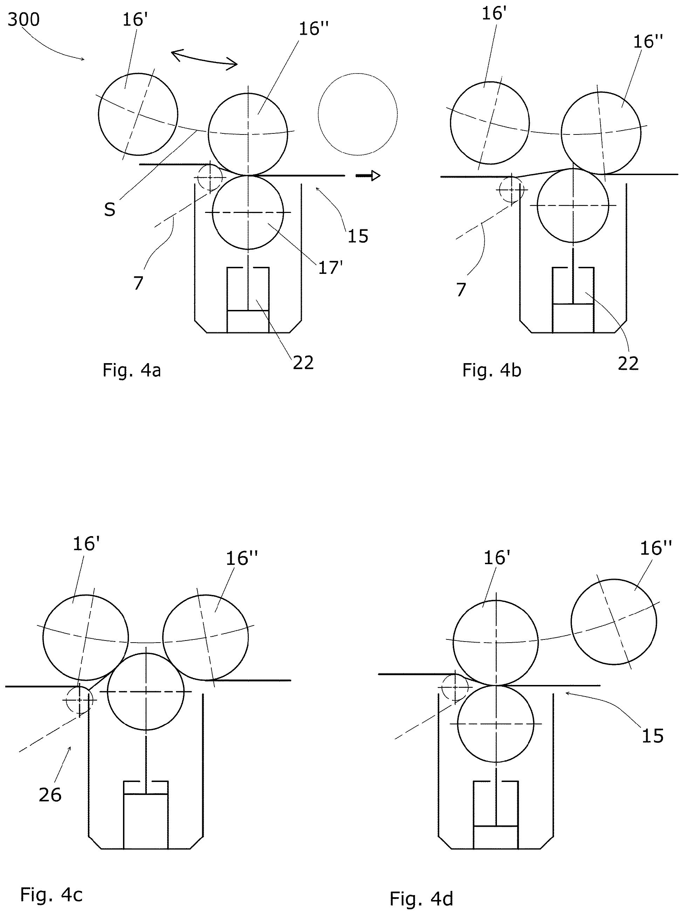

Prinzipiell dasselbe Verfahren lässt sich - wie anhand von Fig. 4a bis 4d erläutert werden wird - auch mittels eines Kalanders 300 verwirklichen, der zumidest eine erste und eine zweite Behandlungswalze 16', 16" in einem entlang einer Strecke S verlagerbaren Magazin (nicht dargestellt) umfasst. Die Strecke S ist bei dem dargestellten Ausführungsbeispiel gekrümmt. Bei der in Fig. 4a dargestellten Betriebsposition bildet die zweite Behandlungswalze 16" mit dem als Gegenwalze 17' ausgebildeten Gegenwerkzeug 17 den Thermobondierwalzenspalt 15, sie befindet sich also in ihrer Arbeitsposition. Zur Vorbereitung des Walzenwechsels wird zunächst das Siebband 7 soweit vom Thermobondierwalzenspalt 15 entfernt, dass ein Freiraum geschaffen wird, der eine Verlagerung der Gegenwalze 17' nach oben an dem Siebband vorbei erlaubt, wenn - wie in Fig. 4b dargestellt ist - die Behandlungswalzen 16', 16" entlang der Strecke S so verlagert werden, dass die Behandlungswalze 16' zur Gegenwalze hin verlagert wird. Bei dieser Verlagerung wird die Anlage der Gegenwalze 17' mit der Behandlungswalze 16" aufrecht erhalten, bis auch die Behandlungswalze 16' mit der Gegenwalze 17' einen weiteren Behandlungsspalt 26 bildet (siehe Fig. 4c). Hierzu wird die Gegenwalze mittels einer Verlagerungseinrichtung 22, beispielsweise einen Hubzylinder, nach oben verlagert. Anschließend werden die Behandlungswalzen 16', 16" weiter entlang der Strecke S verlagert, bis sich die erste Behandlungswalze 16' in ihrer Arbeitsposition befindet, in der sie mit der Gegenwalze 17' den Thermobondierwalzenspalt 15 bildet. Das Siebband wird in seine Ausgangsposition zurückverlagert (siehe Fig. 4d).

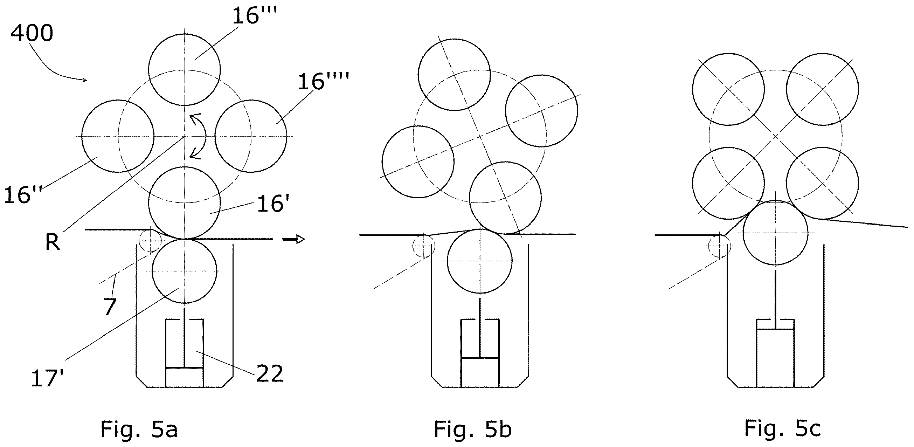

Wie anhand von Fig. 5a bis 5c dargestellt ist, lässt sich dasselbe Verfahren prinzipiell auch mit einem so genannten "Revolverkalander" 400 durchführen. In diesem sind mehrere, austauschbare Behandlungswalzen 16', 16", 16‴, 16"" in einem um eine Revolverachse R rotierbaren Revolvermagazin 33 angeordnet. Anstelle einer Verlagerung des Magazins entlang der Strecke S beim Kalander 300 lässt sich ein Behandlungswalzenwechsel durch Drehen des Revolvermagazins um die Revolverachse R bewerkstelligen, wobei das Siebband 7 und die Gegenwalze 17' in zum Kalander 300 entsprechender Weise verlagert werden.

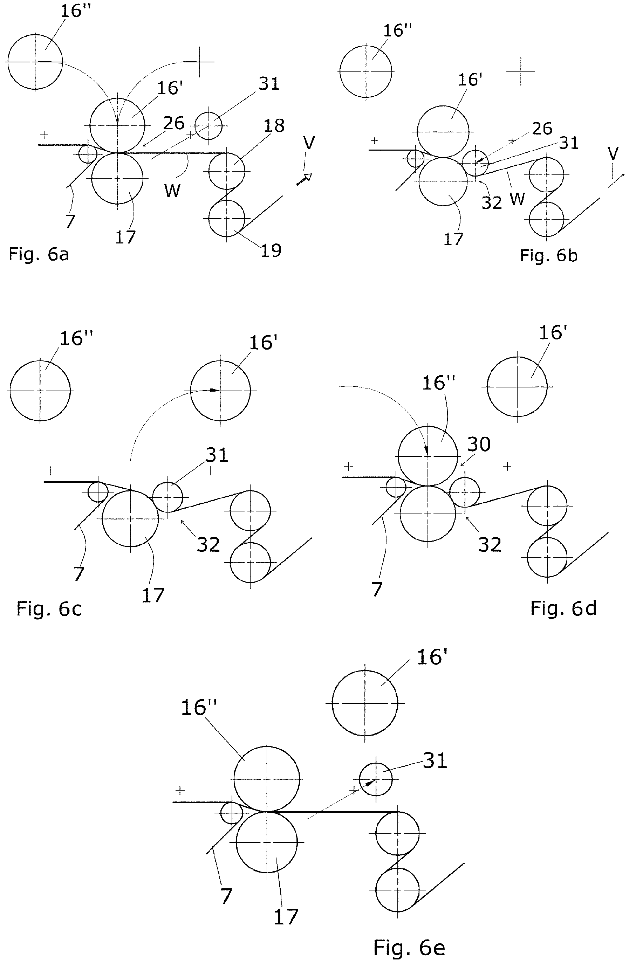

Ein weiteres Ausführungsbeispiel des erfindungsgemäßen Verfahrens zur Behandlung einer Warenbahn soll nun anhand der Figuren 6a bis 6e erläutert werden.

Bei diesem Ausführungsbeispiel wird, wie in Fig. 6a dargestellt ist, die Warenbahn W wiederum von einem Siebband 7 bereitgestellt und durch einen Behandlungsspalt 26 geführt. Anschließend umläuft die Warenbahn W wiederum zwei Kühlwalzen 18, 19.

Im Unterschied zu dem anhand der Figuren 3a bis 3f dargestellten Ausführungsbeispiel des erfindungsgemäßen Verfahrens wird eine Hilfswalze 31 bereitgestellt und, wie in Fig. 6b dargestellt ist, bei weiter bestehendem Behandlungsspalt 26 in Anlage mit dem Gegenwerkzeug 17 gebracht. Zwischen der Hilfswalze 31 und dem Gegenwerkzeug 17 wird so eine Art Hilfsbehandlungsspalt 32 geschaffen. Dieser weist Eigenschaften wie Linienkraft, Linienkraftverteilung und Temperatur auf, die einen Weitertransport der Warenbahn W in Vorlaufrichtung V, sei es mit unveränderter, sei es mit verminderter Vorlaufgeschwindigkeit ermöglichen, wenn der Behandlungsspalt 26 durch Verlagern der ersten Behandlungswalze 16' geöffnet wird.

Der Betriebszustand nach dem Öffnen des Behandlungsspalts 26 ist in Fig. 6c dargestellt. Anstelle der ersten Behandlungswalze 16' kann nun, wie Fig. 6d zeigt, eine zweite Behandlungswalze 16" zur Bildung eines neuen Behandlungsspalts 30 in eine Arbeitsposition verlagert werden. Wenn diese erreicht ist wird, wie in Fig. 6e dargestellt ist, die Hilfswalze 31 entfernt.

Auch können alternativ nur eine einzige Behandlungswalze 16' oder mehr als zwei Behandlungswalzen 16', 16" vorgesehen sein und diese in der Parkposition durch eine Ersatzwalze austauscht werden.

Bei diesem Ausführungsbeispiel des erfindungsgemäßen Verfahrens müssen aufgrund der Nutzung einer Hilfswalze 31 zur Bildung eines Hilfsbehandlungsspalts 32 während eines Wechsels der ersten und zweiten Behandlungswalzen 16', 16" weder das Gegenwerkzeug 17, noch das Siebband 7 verlagert werden.

Zur Durchführung auch des anhand der Fig. 6a bis 6e bekannten Verfahrens eignet sich nicht nur die in Fig. 2a und 2b dargestellte Vorrichtung, indem eine der beiden Behandlungswalzen 16' oder 16" durch eine Hilfswalze ausgetauscht wird, sondern auch Vorrichtungen, wie sie für sich genommen aus der DE 10 2014 102 167 A1, der DE 10 2014 113 755 A1, der DE 10 2015 106 045 A1 oder der DE 10 2015 107 839 A1 bekannt sind.

Bei beiden zuvor beschriebenen Varianten des erfindungsgemäßen Verfahrens ist zudem von Vorteil, dass - im Falle eines beheizten Gegenwerkzeugs, hier einer beheizten Gegenwalze 17' - eine Wärmeabgabe an der Gegenwalze nicht unterbrochen wird. Dadurch führt die dem Wärmedurchsatz proportionale Temperaturdifferenz zwischen Walzeninnen- und Walzenaußentemperatur nicht zu einer Erhöhung der Walzenaußentemperatur während des Walzenwechsels. Der thermisch eingeschwungene Zustand wird (auch am Kalander) zumindest an der Gegenwalze deutlich weniger gestört.

### Bezugszeichenliste:

- 100: Vorrichtung
- 200, 300, 400: Kalander
- 1: Filamente
- 2: Spinnbalken
- 3, 4, 5, 6: Umlenkrollen
- 7: Siebband
- 8: Ablagebereich
- 9, 10: Walzen
- 11, 12: Vorkompaktierungs-Walzenpaare
- 13, 14: Filamentschichten
- 15: Thermobondier-Walzenspalt
- 16: Behandlungswalze
- 16': erste Behandlungswalze
- 16": zweite Behandlungswalze
- 17: Gegenwerkzeug
- 17': Gegenwalze
- 18, 19: Kühlwalzen
- 20: Gestell
- 21: Schlitten
- 22: Verlagerungseinrichtung
- 23: erster Schwenkhebel
- 24: Schwenkachse
- 25: Schwenkantrieb
- 26: Behandlungsspalt
- 27: zweiter Schwenkhebel
- 28: Schwenkachse
- 29: Schwenkantrieb
- 30: Behandlungspalt
- 31: Hilfswalze
- 32: Hilfsbehandlungsspalt
- 33: Revolvermagazin
- L: Luftstrom
- O: Oberseite
- R: Revolverachse
- S: Strecke
- V: Vorlaufrichtung
- W: Warenbahn

## Patentansprüche

1. Verfahren zur Behandlung einer Warenbahn (W),
bei der die Warenbahn (W) in einer Vorlaufrichtung (V) transportiert und durch einen ersten von einer in einer ersten Arbeitsposition befindlichen Behandlungswalze (16') und einem Gegenwerkzeug (17) gebildeten Behandlungsspalt (26) - in Vorlaufrichtung (V) von einem Siebband (7) zugeführt - geführt wird,
wobei das Verfahren die folgenden Schritte für einen Austausch der ersten Walze (16') aufweist:
- Bereitstellung einer zweiten Walze (16", 31);
- Verlagern der zweiten Walze (16", 31) in eine zweite Arbeitsposition, in der die zweite Walze (16", 31) mit dem Gegenwerkzeug (17) einen zweiten Behandlungsspalt (30, 32) bildet;
- Verlagern der ersten Behandlungswalze (16') in eine erste Parkposition, in der sie keinen Bearbeitungsspalt mit dem Gegenwerkzeug (17) bildet.

2. Verfahren nach Anspruch 1, wobei es sich bei der zweiten Walze um eine zweite Behandlungswalze (16") handelt und das Verfahren zur Behandlung der Warenbahn (W) mit der zweiten Behandlungswalze (16") weitergeführt wird.

3. Verfahren nach Anspruch 1, wobei es sich bei der zweiten Walze um eine Hilfswalze (31) handelt, die die Fortsetzung eines Vorlaufs der Warenbahn (W) zumindest für die Dauer des Bringens der ersten Behandlungswalze (16') in ihre Parkposition und das Bringen einer zweiten Behandlungswalze (16") in eine Arbeitsposition zur Bildung eines Behandlungsspalts (30) mit dem Gegenwerkzeug (17) oder den Austausch der ersten Behandlungswalze (16') durch eine Ersatzwalze und das Bringen der Ersatzwalze in die erste Arbeitsposition zur Wiederherstellung des Behandlungsspaltes (26) erlaubt.

4. Verfahren nach Anspruch 2 oder 3, wobei sich die zweite Behandlungswalze (16") bei der Weiterführung des Verfahrens zur Behandlung der Warenbahn (W) in einer zweiten Arbeitsposition befindet, die zumindest so weit von der ersten Arbeitsposition abweicht, wie sie nicht gleichzeitig mit der ersten Behandlungswalze (16') und der zweiten Behandlungswalze (16") möglich wären, weil die erste und die zweite Walze (16', 16") oder ihre Lagerungen dann kollidieren würden.

5. Verfahren nach einem der Ansprüche 1 bis 4, wobei die Warenbahn (W) Vlies, Textil, Kunststoff und/oder Papier umfasst.

6. Verfahren nach einem der Ansprüche 1 bis 5, wobei die Behandlung eine thermische Behandlung der Warenbahn (W), vorzugsweise ein thermisches Verfestigen einer Vlies umfassenden Warenbahn beinhaltet.

7. Verfahren nach Anspruch 6, wobei Filamente aus einem thermoplastischen Material auf der Oberseite des umlaufenden Siebbandes (7) abgelegt und mit diesem zum Behandlungsspalt (26) transportiert werden.

8. Verfahren nach einem der Ansprüche 1 bis 7, wobei als Gegenwerkzeug (17) eine Gegenwalze (17') bereitgestellt wird.

9. Vorrichtung zur Durchführung eines Verfahrens nach einem der Ansprüche 1 bis 8,
wobei die Vorrichtung eine erste, zur Bildung eines ersten Bearbeitungsspalts (26) mit einem Gegenwerkzeug (17) in eine erste Arbeitsposition bringbare Behandlungswalze (16') sowie eine zweite, zur Bildung eines zweiten Bearbeitungsspalts (30) mit dem Gegenwerkzeug (17) in eine zweite Arbeitsposition bringbare zweite Walze (16", 31) umfasst,
wobei die ersten und zweiten Walzen in nicht übereinstimmende Zwischenpositionen verlagerbar sind, in denen sie zeitgleich mit dem Gegenwerkzeug jeweils einen Behandlungsspalt bilden **dadurch gekennzeichnet, dass** ein Siebband (7) vorgesehen ist, mit dem die Warenbahn (W) dem ersten Bearbeitungsspalt (26) zuführbar ist.

10. Vorrichtung nach Anspruch 9, **dadurch gekennzeichnet, dass** die Vorrichtung derart ausgebildet ist, dass die erste Behandlungswalze (16') zwischen einer ersten Arbeitsposition, einer ersten Zwischenposition und einer ersten Parkposition verlagerbar ist.

11. Vorrichtung nach Anspruch 9 oder 10, **dadurch gekennzeichnet, dass** es sich bei der zweiten Walze um eine zweite Behandlungswalze (16") handelt, die vorzugsweise zwischen einer zweiten Arbeitsposition, einer zweiten Zwischenposition und einer zweiten Parkposition verlagerbar ist.

12. Vorrichtung nach Anspruch 9 oder 10, **dadurch gekennzeichnet, dass** es sich bei der zweiten Walze um eine Hilfswalze (31) handelt.

13. Vorrichtung nach einem der Ansprüche 9 bis 12, **dadurch gekennzeichnet, dass** das Gegenwerkzeug (17) eine Gegenwalze (17') ist, und dass es sich bei zumindest einer der Behandlungswalze (16'), der zweiten Walze (16"), der Hilfswalze (31) und der Gegenwalze (17') um eine beheizte Walze handelt.

14. Vorrichtung nach einem der Ansprüche 9 bis 13, **dadurch gekennzeichnet, dass** das Gegenwerkzeug (17) eine Gegenwalze ist, und dass es sich bei zumindest einer der Behandlungswalze (16'), der zweiten Walze (16"), der Hilfswalze (31) und der Gegenwalze (17') um eine gravierte Walze handelt.

15. Vorrichtung nach einem der Ansprüche 9 bis 14, **dadurch gekennzeichnet, dass** das Gegenwerkzeug (17) eine Gegenwalze ist, und dass es sich bei zumindest einer der Behandlungswalze (16'), der zweiten Walze (16"), der Hilfswalze (31) und der Gegenwalze (17') um eine durchbiegesteuerbare Walze handelt.

## Claims

1. Method for treating a web of endless fabric (W),
in which the web of endless fabric (W) is transported in an advance direction (V) and guided, supplied in the advance direction (V) by a screen belt (7), through a first treatment gap (26) formed by a treatment roller (16'), located in a first working position, and a counter tool (17),
wherein the method comprises the following steps for replacing the first roller (16'):
- providing a second roller (16", 31);
- displacing the second roller (16", 31) into a second working position in which the second roller (16", 31) forms a second treatment gap (30, 32) with the counter tool (17);
- displacing the first treatment roller (16') into a first parking position in which it does not form a machining gap with the counter tool (17).

2. Method according to claim 1, wherein the second roller is a second treatment roller (16") and the method for treating the web of endless fabric (W) is continued with the second treatment roller (16").

3. Method according to claim 1, wherein the second roller is an auxiliary roller (31) which allows continuation of an advance of the web of endless fabric (W) at least for the duration of bringing the first treatment roller (16') into its parking position and bringing a second treatment roller (16") into a working position in order to form a treatment gap (30) with the counter tool (17) or replacing the first treatment roller (16") with a replacement roller and bringing the replacement roller into the first working position in order to restore the treatment gap (26).

4. Method according to either claim 2 or claim 3, wherein, during the continuation of the method for treating the web of endless fabric (W), the second treatment roller (16") is in a second working position which deviates from the first working position at least to such an extent that it would not be possible for the positions to be simultaneous with the first treatment roller (16") and the second treatment roller (16") because the first and second rollers (16', 16") or their bearings would then collide.

5. Method according to any of claims 1 to 4, wherein the web of endless fabric (W) comprises nonwoven fabric, textile, plastics material and/or paper.

6. Method according to any of claims 1 to 5, wherein the treatment includes a thermal treatment of the web of endless fabric (W), preferably a web of endless fabric comprising thermal solidification of a nonwoven fabric.

7. Method according to claim 6, wherein filaments made of a thermoplastic material are deposited on the top of the circulating screen belt (7) and are transported to the treatment gap (26) therewith.

8. Method according to any of claims 1 to 7, wherein a counter roller (17') is provided as a counter tool (17).

9. Device for carrying out a method according to any of claims 1 to 8, wherein the device comprises a first treatment roller (16') which can be brought into a first working position in order to form a first machining gap (26) with a counter tool (17) and a second roller (16", 31) which can be brought into a second working position in order to form a second machining gap (30) with the counter tool (17),
the first and second rollers being displaceable in non-matching intermediate positions in which they each simultaneously form a treatment gap with the counter tool, **characterized in that** a screen belt (7) is provided, by means of which the web of endless fabric (W) can be supplied to the first machining gap (26).

10. Device according to claim 9, **characterized in that** the device is designed such that the first treatment roller (16') can be displaced between a first working position, a first intermediate position and a first parking position.

11. Device according to either claim 9 or claim 10, **characterized in that** the second roller is a second treatment roller (16") which is preferably displaceable between a second working position, a second intermediate position and a second parking position.

12. Device according to either claim 9 or claim 10, **characterized in that** the second roller is an auxiliary roller (31).

13. Device according to any of claims 9 to 12, **characterized in that** the counter tool (17) is a counter roller (17'), **and in that** at least one of the treatment rollers (16'), the second roller (16)", the auxiliary roller (31) and the counter roller (17') are a heated roller.

14. Device according to any of claims 9 to 13, **characterized in that** the counter tool (17) is a counter roller, **and in that** at least one of the treatment rollers (16'), the second roller (16"), the auxiliary roller (31) and the counter roller (17') are an engraved roller.

15. Device according to any of claims 9 to 14, **characterized in that** the counter tool (17) is a counter roller, **and in that** at least one of the treatment rollers (16'), the second roller (16"), the auxiliary roller (31) and the counter roller (17') is a deflection-controlled roller.

## Revendications

1. Procédé permettant le traitement d'une nappe de tissu (W),
dans lequel la nappe de tissu (W) est transportée dans une direction d'avance (V) et guidée - de manière acheminée dans la direction d'avance (V) depuis une bande tamis (7) - à travers un premier interstice de traitement (26) formé par un premier rouleau de traitement (16') se trouvant dans une première position de travail et un contre-outil (17),
dans lequel le procédé présente les étapes suivantes pour un remplacement du premier rouleau (16') :
- fourniture d'un second rouleau (16", 31) ;
- déplacement du second rouleau (16", 31) dans une seconde position de travail dans laquelle le second rouleau (16", 31) forme avec le contre-outil (17) un second interstice de traitement (30, 32) ;
- déplacement du premier rouleau de traitement (16') dans une première position de stationnement dans laquelle il ne forme pas d'interstice d'usinage avec le contre-outil (17).

2. Procédé selon la revendication 1, dans lequel le second rouleau est un second rouleau de traitement (16") et le procédé permettant le traitement de la nappe de tissu (W) est poursuivi avec le second rouleau de traitement (16").

3. Procédé selon la revendication 1, dans lequel le second rouleau est un rouleau auxiliaire (31) qui permet la continuation d'une avance de la nappe de tissu (W) au moins pendant la durée de la mise en place du premier rouleau de traitement (16') dans sa position de stationnement et la mise en place d'un second rouleau de traitement (16") dans une position de travail pour la formation d'un interstice de traitement (30) avec le contre-outil (17) ou le remplacement du premier rouleau de traitement (16') par un rouleau de substitution et la mise en place du rouleau de substitution dans la première position de travail pour le rétablissement de l'interstice de traitement (26).

4. Procédé selon la revendication 2 ou 3, dans lequel, lors de la poursuite du procédé permettant le traitement de la nappe de tissu (W), le second rouleau de traitement (16") se trouve dans une seconde position de travail qui diffère de la première position de travail au moins dans la mesure où elles ne pourraient pas être simultanées avec le premier rouleau de traitement (16') et le second rouleau de traitement (16"), car le premier et le second rouleau (16', 16") ou leurs paliers entreraient alors en collision.

5. Procédé selon l'une des revendications 1 à 4, dans lequel la nappe de tissu (W) comprend un non-tissé, un textile, une matière plastique et/ou du papier.

6. Procédé selon l'une des revendications 1 à 5, dans lequel le traitement contient un traitement thermique de la nappe de tissu (W), de préférence une solidification thermique d'une nappe de tissu comprenant un non-tissé.

7. Procédé selon la revendication 6, dans lequel des filaments en un matériau thermoplastique sont déposés sur la face supérieure de la bande tamis (7) continue et transportés avec celle-ci vers l'interstice de traitement (26).

8. Procédé selon l'une des revendications 1 à 7, dans lequel un contre-rouleau (17') est fourni comme contre-outil (17).

9. Dispositif permettant la mise en oeuvre d'un procédé selon l'une des revendications 1 à 8, dans lequel le dispositif comprend un premier rouleau de traitement (16') pouvant être amené dans une première position de travail pour la formation d'un premier interstice d'usinage (26) avec un contre-outil (17), ainsi qu'un second rouleau (16", 31) pouvant être amené dans une seconde position de travail pour la formation d'un second interstice d'usinage (30) avec le contre-outil (17),
dans lequel les premier et second rouleaux peuvent être déplacés dans des positions intermédiaires non concordantes dans lesquelles ils forment simultanément respectivement un interstice de traitement avec le contre-outil, **caractérisé en ce qu'**une bande tamis (7) est prévue, avec laquelle la nappe de tissu (W) peut être acheminée au premier interstice d'usinage (26).

10. Dispositif selon la revendication 9, **caractérisé en ce que** le dispositif est conçu de telle sorte que le premier rouleau de traitement (16') peut être déplacé entre une première position de travail, une première position intermédiaire et une première position de stationnement.

11. Dispositif selon la revendication 9 ou 10, **caractérisé en ce que** le second rouleau est un second rouleau de traitement (16") qui peut être déplacé de préférence entre une seconde position de travail, une seconde position intermédiaire et une seconde position de stationnement.

12. Dispositif selon la revendication 9 ou 10, **caractérisé en ce que** le second rouleau est un rouleau auxiliaire (31).

13. Dispositif selon l'une des revendications 9 à 12, **caractérisé en ce que** le contre-outil (17) est un contre-rouleau (17'), **et en ce qu'**au moins l'un parmi le rouleau de traitement (16'), le second rouleau (16"), le rouleau auxiliaire (31) et le contre-rouleau (17') est un rouleau chauffé.

14. Dispositif selon l'une des revendications 9 à 13, **caractérisé en ce que** le contre-outil (17) est un contre-rouleau, **et en ce qu'**au moins l'un parmi le rouleau de traitement (16'), le second rouleau (16"), le rouleau auxiliaire (31) et le contre-rouleau (17') est un rouleau gravé.

15. Dispositif selon l'une des revendications 9 à 14, **caractérisé en ce que** le contre-outil (17) est un contre-rouleau, **et en ce qu'**au moins l'un parmi le rouleau de traitement (16'), le second rouleau (16"), le rouleau auxiliaire (31) et le contre-rouleau (17') est un rouleau pouvant être commandé en flexion.
